# EUROPEAN PATENT APPLICATION

(11) **EP 1 840 178 A1**
(43) Date of publication of application: **03.10.2007**
(21) Application number: 06708834.4
(22) Date of filing: 17.01.2006
(51) Int. Cl.: C09D 11/02

(54) **INDUSTRIAL DECORATION INK**

(30) Priority: 18.01.2005 ES 200500083
(71) Applicant: Torrecid S.A., 12110 Alcora (ES); Corts Ripoll, Juan Vicente, 12006 Castellon (ES); Conception Heydorn, Carlos, 12560 Benicassim (ES); Ruiz Vega, Oscar, 12006 Castellon (ES)
(72) Inventor: CORTS RIPOLL, Juan, Vicente, 12006 Castellon (ES); COCEPCION HEYDORN, Carlos, 12560 Benicassim (ES); RUIZ VEGA, Oscar, 12006 Castellon (ES); SANMIGUEL ROCHE, Francisco, 12100 Castellon (ES)
(74) Representative: Isern-Jara, Nuria
(86) International application number: PCT/ES2006/000015
(87) International publication number: WO 2006/077273

(57) **Abstract**

The ink applicable to industrial decoration, especially for products that require a thermal treatment subsequent to the printing by means of an ink injection technique, **characterised in that** the composition contains a solid part made up of inorganic materials and a non-aqueous liquid part that are homogenised and because of the fact that they can support firing temperatures of between 500°C and 1,300°C. The function of the solid part is to provide the corresponding colour, whilst the main function of the liquid part is for the inks to have appropriate characteristics to achieve a good performance of same during the ink injection decorating process.

## Description

### OBJECT OF THE INVENTION

This invention refers to an ink that is applicable to industrial decoration, incorporating appreciable innovations and advantages over known inks.

More specifically it makes reference to an ink that is applicable to industrial decoration, especially for products that require a thermal treatment subsequent to the printing via an ink jet technique.

### BACKGROUND OF THE INVENTION

The technological field referring to ink injection is widely used in multiple sectors, such as graphic art, the textile industry, industrial marking and there being a high number of Industrial Property registrations that refer to printing equipments and also to the inks used.

The existence of a type of products that require a thermal treatment once having been printed are well known, such as in flooring and ceramic finishes, roof tiles, glass, bricks, crockery, bathroom fittings, etc. in which attempts have been made to apply the technology of ink injection as it incorporates numerous advantages over other printing techniques such as silk screening or decorating with rollers.

However, it has not been possible to achieve completely satisfactory results because suitable inks have not been available on the market, so at the present time they have not had general acceptance.

The patents N° WO 0151573, WO 0245870 and the American patent US 5714236 describe a set of inks for the decoration of ceramic products, the colouring power of which lies in the fact that they contain dissolved metallic cations. Although these inks are stable at the firing temperature of said ceramic products, on the contrary they present several disadvantages due to the fact that the inks penetrate into the enamel layer prior to the firing process and, therefore, the result obtained mainly depends on the previous enamelling process and the subsequent storage. On the other hand, the colours that provide these inks are very faded, the use of special enamels being necessary for some of these colours, this means, that final products are not obtained that are in accordance with the style designers' tastes for the industry and, therefore have a difficulty for marketing.

The patents N° ES 2170667 and US 6357868 describe inks that contain ceramic pigments, in such a way that the above stated disadvantages are solved. However, the objects of the inventions make reference to the components that give the inks the properties of being photo-sensitive or thermoplastic. Such components are very specific in order to achieve these types of properties and because of same do not comply with the requirements necessary for the correct performance of the inks during the printing process and, therefore, for them to have an industrial application.

The patents make reference to inks for products that do not require a subsequent thermal treatment, such as in the patents n° US 5837046, US 5843219, US 5973027, WO 004631 and DE 19835397 which fulfil the requirements necessary for a suitable performance in the printing process, however, they are not stable at the firing temperature used in the thermal treatment. In addition, ceramic pigments cannot be incorporated into their composition due to the fact that they do not have sufficient suspension power for inorganic particles.

### DESCRIPTION OF THE INVENTION

This present invention has been developed for the purpose of providing an ink aimed at solving the previously stated disadvantages, in addition giving other advantages that will be evident from the description that is attached below.

The ink of this present invention is applicable to industrial decoration, especially for products that require a thermal treatment subsequent to the printing by means of an ink injection technique, that is characterised because the composition contains a solid part made up of inorganic materials and a non-aqueous liquid part that are homogenised and because of the fact that they can support a firing temperature of between 500°C and 1,300°C.

The purpose of the solid part is to provide the corresponding colouring, whilst the main purpose of the liquid part is for the inks to have some suitable characteristics to achieve the appropriate performance of same during the ink injection decorating process. Said solid part consists of one or more components chosen from ceramic pigments, fluxing and anti-sedimenting materials.

Thanks to these characteristics, an ink is obtained for the industrial decoration applicable to products that require a thermal treatment subsequent to printing, by using an ink injection technique.

Said solid part consists of one or more components chosen from ceramic pigments, with a size of less than 5 µm and, by preference less than 3 µm. These ceramic pigments are normally used in the ceramic industry and are based on crystalline structures of zirconium silicate, olivite, sphene, spinels, etc., reduced in size by whatever known milling process. Also these ceramic pigments can made up from one or several natural or synthetic oxides with colouring power, such as chromium oxide or iron oxide. In a like manner, the ceramic pigments can be obtained by Sol-Gel methods, controlled co-precipitation or any other techniques described above in the state of the art to obtain crystalline materials in nano-particle form. Logically, mixed methods of the differing types of the stated nano-metric sized ceramic pigments can be used, without this being by way of limitation on the present invention.

Another main component of the solid part of the inks is that which is called fluxing, the function of which is to make the ceramic pigment integrate suitably into the surface of the product to be decorated during the firing process of same, so that defects or unwanted finishes do not appear such as an excess of refractiveness. Any of the frits normally used in the ceramic industry can be used as flux, mainly those which have a softening temperature of less than 1,500°C, and preferably those that have a softening temperature lower than 900°C. Also compounds or mixtures of inorganic compounds can be used as fluxing material, preferably oxides or halides, either natural or synthetic, antimony, lead, bismuth, vanadium, lithium, sodium, potassium, iron, phosphorus, silver, tellurium, thallium, palladium, lanthanum, that have a softening temperature lower than 1,050°C and preferably lower than 900°C. All of these types of materials must have a particle size of less than 5 µm and preferably less than 3 µm, and can be used individually or equally mixed, without these placing any restriction for the object of the invention.

As both the ceramic pigments and equally the fluxing materials described previously can usually have a high specific weight, it is necessary to incorporate solid materials in the ink composition that act as anti-sedimenting materials. These materials are characterised because they have a high specific surface, greater than 100 m²/g and preferably greater than 140 m² /g. Examples of these types of materials are smoke black, clays, kaolin, aluminium silicate or oxide and magnesium colloidal hydroxides, calcium, strontium, barium, wolfram, zinc, aluminium, silicon, tin and antimony, the surface of said particles being able to be organofilised.

In accordance with another characteristic of the invention, total content of the solid material is within the range from 5% and 60% of the total weight of the ink, the proportions of the pigments and the fluxing material being able to be modified in line with the final effect that is required for the final decorated ceramic product (colour, intensity, fluxing, etc.)

As and how has been mentioned previously, the main function of the liquid part of the ink is to achieve a correct performance of the ink during the decorating process. It order to achieve this it is necessary for the ink to have a viscosity of between 14 and 40 cPs, preferably between 15 and 30 cPs, and surface tension of between 20 and 50 mN/m, preferably between 25 and 40 mN/m. In addition, it guarantees that the solid part, that has a high specific weight, remains in suspension and that the inks can be printed in the temperature interval between 40° C and 80°C, without this bringing about the volatilisation of any of the components.

In order to fulfil any of these requirements, the liquid part of the ink is made up of a mixture of one or more components chosen between apolar components, polar components, stabilising agents, dispersant agents and intensity boosting agents. It is an essential condition that all the components that make up the liquid phase are perfectly miscible and, therefore, there are no separation phases between them.

Aromatic hydrocarbons and aliphatic hydrocarbons are used as apolar components, both cyclical and equally open chain, or even mixtures of same, in such a way that the average molecular weight is between 150 and 300, having a flash point in excess of 90°C. The content of the apolar component, when it forms part of the make up of the ink, is between 30% and 70% of the total weight of the ink.

The polar component of the liquid part of the ink is made up of one or several of the following products: aliphatic fatty acids, glycols, poly-glycols, glycol esters, phenols, alkyl-phenols, fatty acids, terpenic alcohols, terpenic oils and vinylpyrridilone copolymers. Just the same as with the apolar component, the polar component must have a flash point in excess of 90°C. The content of the polar component, when it forms part of the make up of the ink, must be between 5% and 90% of the total weight of the ink. From the differing polar compounds that can be used, mixtures of one or more compounds are preferable chosen from amongst fatty acids and polypropylene glycols, finding in this case the contents of the polar content between 5% and 50% of the total weight of the ink. Mixture of one or more compounds are also preferable chosen from terpenic alcohols and polypropylene glycols, finding in this case the polar component between 40% and 90% of the total weight of the ink. In whichever case, the polypropylene glycol content of the ink will be less than 50% of the total weight of the ink.

On the basis of that which has been described up to now, the inks have a good performance during the printing process, but with difficult industrial application as they have low stability due to the high specific weight of the solid components, the incorporation of dispersing and stabilising agents being necessary.

Materials that interact with the surface of the pigment or which establish themselves by means of steric and/or electrical inhibition can be used as stabilising agents, such as phosphoric acid esters, amine salts, polyester styrene resins, olefins in xylene, lecithin, castor oil derivatives, polycarbonic acid, pre-amide wax dissolved in xylene and micronised polyethylene wax, or also alcoxy-silane based coupling agents such as, acryloxy-propyl-triethyoxy-silane or amino-propytriethy-oxy-silane. In all cases, the contents of the stabilising agent used were less than 5% of the total weight of the ink.

A hydroxyl-alkyl amine salt of a copolymer can be used as a dispersing agent with acid groups, solutions of a non-saturated polyamide salt and acid polyesters with low molecular weight, a phosphoric acid polymer salt, an ester of carboxylic hydroxyl-functional acid. In all cases, the contents of the stabilising agent used were less than 5% of the total weight of the ink.

Finally, for the purpose of boosting the intensity of the inks or adjusting their tone, salt solutions or other organic or inorganic compounds of elements that provide colour can be incorporated into the composition of the inks, such as Co, Cr, Pr, V, Ag, Ru, Ti, Mn, Au, Fe, Cu, Ni, Mo, W, Y and Sb, provided that they are compatible with the rest of the liquid components of the inks. All of these components are commercially available and used in the previous state of the art.

Both the preparation of the ceramic pigments, fluxing and anti-sedimenting solids with a particle size of less than 5 µm, and equally the inks not requiring special techniques, in such a way that conventional milling and/or homogenising techniques can be used.

Other characteristics and advantages of the ink object of this present invention will become clear from the description of the preferred embodiments, but are not exclusive.

### A DESCRIPTION OF A PREFERRED EMBODIMENT

Below four examples of inks for decoration are expounded but which are not by way of being limiting, that have the characteristics described in the set of claims.

With inks formulated and prepared on the basis of that previously described double fired, porous single fired, earthenware and porcelain earthenware ceramic tiles have been decorated using the ink injection technique, these have been fired using the firing curves normally used in the ceramic industry at a maximum temperature of 1,080°C, 1,100°C, 1,150°C and 1,200°C respectively. In the four cases normal enamels have been used which, after firing, have given matt and shiny finishes. A "single-pass" piece of industrial equipment from the company Durst has been used for the decoration of the pieces, which was fitted with Spectra heads.

Also with these inks the decoration of other types of ceramic materials has been carried out, such as on crockery items, roof tiles or bricks, likewise glass, having obtained optimum results in all cases.

### Example 1

In Table I the composition of the solid part of the different inks is stated for the industrial decoration based on the present invention in which different systems of pigmentation and fluxing have been used:

**Table I (contents as a % of the total weight of the ink)**

| | | INK | | | |
|---|---|---|---|---|---|
| Component | Description | 1 | 2 | 3 | 4 |
| AL-3315 | Blue ceramic pigment < 5µm | 12.1 | | | |
| Al-3909 | Blue ceramic pigment < 5µm | 22.1 | | | |
| Al-7310 | Magenta ceramic pigment < 5µm | | 29.8 | | |
| Al-5007 | Yellow ceramic pigment < 5µm | | | 17.5 | |
| Al-8001 | Black ceramic pigment < 5µm | | | | 34.3 |
| Al-5101 | Yellow nano-metric sized ceramic pigment | | | 17.5 | |
| Fe₂O₅ | Red colouring Synthetic oxide <5µm | | 6.3 | | |
| EBS5003 | Flux: Frit with Tr = 800°C | 3.2 | | 2.1 | 3.2 |
| P₂O₅ | Flux: Synthetic Oxide | | 1.4 | 0.4 | |
| Aluminium Hydroxide Gel | Solid Stabiliser | 2.5 | 2.5 | 2.5 | 2.5 |

All of the ceramic pigments used were supplied by the Al-Farben company. The rest of the materials used are easily available on the market.

The liquid part of the ink is the same in all of them and is basically made from a cyclical chain aliphatic hydrocarbon corresponding to the apolar component, a mixture of fatty acids as the polar component, a polycarbonic acid as the stabilising agent and an acid polyester as the dispersant agent. The liquid part in all of the cases makes up 60% of the total weight of the ink.

On the other hand, in the following table II, the viscosity and surface tension of the different inks shown in Table I as stated.

**Table II**

| INK | VISCOSITY (cPs) | Surface Tension (mN/m) |
|---|---|---|
| 1 | 29 | 30 |
| 2 | 29 | 33 |
| 3 | 32 | 32 |
| 4 | 30 | 32 |

With these inks some printing trials have been carried out with heads from the Spectra company, printing for more than 10 hours at a frequency of 20 KHz and a voltage of 100 V.

### Example 2

In the following table the composition of the liquid part of differing inks based on the present invention are stated in which different polar, apolar, dispersants, stabilising agents and intensity boosting agent components were used.

**Table III (contents as a % of the total weight of the ink)**

| | | INK | | | |
|---|---|---|---|---|---|
| Component | Description | 1 | 2 | 3 | 4 |
| Cyclotetradecane | Apolar component: cyclical chain aliphatic hydrocarbon | 42.0 | 37.5 | - | - |
| n-tetradecane | Apolar component: open chain aliphatic hydrocarbon | 8.2 | 7 | 43.5 | 49 |
| 1-hexadecanol | Polar component: aliphatic fatty acid | 5.3 | 5.6 | 10.5 | |
| Myristic acid | Polar component: fatty acids | 7.1 | 18.2 | 13.6 | 17.5 |
| Polycarbonic acid | Stabiliser | 0.7 | 0.7 | 0.7 | 1.8 |
| Polyester Acid | Dispersant | 0.7 | 1.0 | 1.7 | 1.7 |
| Co Octoate | Intensity boosting agent | 6.0 | - | - | - |

The solid part of the ink is common in all of them and is made up of Al-3315 and Al-3909 pigments with a particle size of less than 5 µm, the frit EBS5003 as flux and aluminium hydroxide gel as the solid stabiliser. The solid part in all of the cases makes up 30% of the total weight of the ink.

The following table states the viscosity and surface tension of the different inks in Table III.

**Table IV**

| INK | VISCOSITY (cPs) | Surface Tension (mN/m) |
|---|---|---|
| 4 | 29 | 30 |
| 5 | 29 | 33 |
| 6 | 32 | 32 |
| 7 | 30 | 32 |

With these inks some printing trials have been carried out with heads from the Spectra company, printing for more than 10 hours at a frequency of 20 KHz and a voltage of 100 V.

### Example 3

With the inks 1 to 4 stated previously in Example 1, ceramic items were decorated using industrial equipment from the Durst company that had Spectra heads fitted. The printing frequency was 20 KHz and the voltage was 100 V.

Motifs were decorated that were based on four colour printing for double firing, single firing porous ceramic tiles earthenware and porcelain earthenware tiles, subjected to maximum firing temperatures of 1,080°C, 1.100°C, 1,150°C and 1,200°C respectively. In all cases enamels were used which after firing gave matt and shiny finishes, having obtained pieces that were in accordance with the aesthetic and technical characteristics required in the ceramic industry.

In a like manner, plates and roof tiles were decorated with motifs based on four-colour printing, in all of these cases having obtained final products that meet the required demands.

### Example 4

An eighth ink was prepared according to the following formulation:

| Component | Description | % by weight |
|---|---|---|
| A1-8001 | Black ceramic pigment < 5µm | 40 |
| EBS5003 | Flux: Frit with Tr = 800°C | 20 |
| Bentonite | Solid Stabiliser | 3 |
| n-tetradecane | Apolar component: Open chain aliphatic hydrocarbon | 25 |
| 1-hexadecanol | Polar component: Aliphatic fatty alcohol | 10 |
| Polyester Acid | Dispersant | 2 |

With this ink printing trials were carried out with print heads from the Spectra company, although it was only possible to print for 10 minutes, a series of problems having been noticed in regard to the limited stability and high sedimentation of the ink.

## Claims

1. Ink that is applicable to industrial decoration, especially for products that require a thermal treatment subsequent to the printing by means of an ink injection technique, **characterised in that** the composition contains a solid part made up of inorganic materials and a non-aqueous liquid part that are homogenised, and because of the fact that they can support a firing temperature of between 500°C and 1,300°C.

2. Ink according to Claim 1, **characterised in that** the solid part consists of one or more components chosen from ceramic pigments, fluxing and anti-sedimenting materials.

3. Ink according to Claim 2, **characterised in that** the solid part is made up with a range of between 5% and 60% of the total weight of the ink.

4. Ink according to Claim 2, **characterised in that** the ceramic pigments, the fluxing and anti-sedimenting materials have a particle size of less than 5 µm, and by preference less than 3 µm.

5. Ink according to Claims 2 to 4, **characterised in that** the ceramic pigments are a mixture of one or more components chosen from nano-sized natural or synthetic colouring oxides and pigments.

6. Ink according to Claims 2 to 4, **characterised in that** the fluxing materials have a softening temperature of less than 1,050°C, preferably less than 900°C.

7. Ink according to Claims 2 and 6, **characterised in that** the fluxing materials have a compound or a mixture of inorganic compounds chosen from natural or synthetic oxides or halides of boron, antimony, lead, bismuth, vanadium, lithium, sodium, potassium, iron, phosphorus, silver, tellurium, thallium, palladium or lanthanum.

8. Ink according to Claims 2 to 6, **characterised in that** the anti-sedimenting materials have a specific surface greater than 100 m²/g, preferably greater than 140 m²/g.

9. Ink according to Claims 2 and 8, **characterised in that** the anti-sedimenting materials are a mix of one or more compounds chosen from smoke black, clay, kaolin, aluminium silicate, magnesium colloidal oxide and hydroxide, calcium, strontium, barium, wolfram, zinc, aluminium, zinc, aluminium, silicon, tin and antimony.

10. Ink according to Claim 1, **characterised in that** the liquid part of the ink is made up of a mixture of one or more components chosen between apolar components, polar components, stabilising agents, dispersant agents and intensity boosting agents.

11. Ink according to claim 10, **characterised in that** the apolar component is a mixture of one or more compounds chosen from cyclical and/or open chain aromatic hydrocarbons and aliphatic hydrocarbons.

12. Ink according to Claim 11, **characterised in that** the apolar component has an average molecular weight between 150 and 300.

13. Ink according to Claim 11, **characterised in that** the apolar component has a flash point in excess of 90°C.

14. Ink according to Claim 11, **characterised in that** the apolar component constitutes between 30% and 70% of the total weight of the ink when it forms part of the ink.

15. Ink according to Claim 10, **characterised in that** the polar component, when it forms part of the ink, is a mixture of one or more compounds chosen from amongst aliphatic fatty alcohols, glycols, poly-glycols, glycol esters, ethers of glycol, phenol, alkyl-phenol, fatty acids, terpenic alcohols, terpenic oils, and vinylpyrrolidone co-polymers.

16. Ink according to Claim 15, **characterised in that** the polar component is made up with a range of between 5% and 90% of the total weight of the ink.

17. Ink according to Claim 10, **characterised in that** the polar component is a mixture of one or more components chosen from fatty acids and polypropylene glycols.

18. Ink according to Claim 17, **characterised in that** the polar component constitutes between 5% and 50% of the total weight of the ink when it forms part of the ink.

19. Ink according to Claim 17, **characterised in that** the polypropylene glycol content is less than 50% of the total weight of the ink.

20. Ink according to Claim 10, **characterised in that** the polar component is a mixture of one or more compounds chosen from terpenic acids and polypropylene glycols.

21. Ink according to Claim 20, **characterised in that** the polar component constitutes between 40% and 90% of the total weight of the ink when it forms part of the ink.

22. Ink according to Claims 20 and 21, **characterised in that** the polypropylene glycol content is less than 50% of the total weight of the ink.

23. Ink according to Claim 15, **characterised in that** the polar component has a flash point in excess of 90°C.

24. Ink according to Claim 10, **characterised in that** the stabilising agent is a mixture of one or more compounds chosen from lecithin, phosphoric acid esters, amine salts, polyester-styrene resins, xylene olefins, castor oil derivatives, acryloxy-propyl-triethyoxy-silane, polycarbonic acid, pre-amide wax dissolved in xylene and micronised polyethylene wax.

25. Ink according to Claim 24, **characterised in that** the stabilising agent constitutes less than 5% of the total weight of the ink when it forms part of the ink.

26. Ink according to Claim 10, **characterised in that** the dispersant agent is a mixture of one or more components chosen from a hydroxy-alkymine salts of a copolymer in block with acid groups, solutions of a non-saturated polyamide salts and acid polyesters with low molecular weight, a phosphoric acid polymer salts, esters of carboxylic hydroxyl-functional acid.

27. Ink according to Claim 26, **characterised in that** the content of the dispersing agent is less than 5% of the total weight of the ink.

28. Ink according to Claim 10, **characterised in that** the intensity booster agent is a mixture of one or several compounds chosen from salt solutions or other organic or inorganic compounds of elements that provide pigmentation.
